# EUROPEAN PATENT APPLICATION

(11) **EP 2 669 824 A1**
(43) Date of publication of application: **04.12.2013**
(21) Application number: 11856767.6
(22) Date of filing: 25.11.2011
(51) Int. Cl.: G06F 17/50

(54) **DESIGN SUPPORT SYSTEM, METHOD AND PROGRAM**

(30) Priority: 25.01.2011 JP 2011012439
(71) Applicant: Hitachi, Ltd., Tokyo 100-8280 (JP)
(72) Inventor: YAMAMOTO Noriaki, Chiyoda-ku, Tokyo 100-8220 (JP)
(74) Representative: Strehl Schübel-Hopf & Partner
(86) International application number: PCT/JP2011/077263
(87) International publication number: WO 2012/101895

(57) **Abstract**

In order to provide a design support technology that enables the assembled positions of components to be selected, tolerances to be input, and a cumulative assembly precision to be estimated even if the assembly sequence is not configured in each case, a 3D CAD data analysis device (4) in a design support system for an assembly composed of multiple parts comprises: a means for generating a dynamic model, which generates a dynamic model comprising the disposition of each part of an assembly, shape characteristics, part attributes, and relationships between adjacent parts from 3D CAD data; a means for calculating the relative degrees of freedom of parts, which calculates the assembly precision between parts from the dimensional precision related to connections in the dynamic model, and the relative degrees of freedom of the parts, which represents motion space; and a means for calculating the assembly sequence and cumulative assembly precision, which detects connections with small relative degrees of freedom of parts, and aggregates the relative degrees of freedom of the parts according to the assembly sequence of the assembly.

## Description

### TECHNICAL FIELD

The present invention relates to a design support system, method, and program.

### BACKGROUND ART

Japanese Patent Application Laid-Open No. 2002-269158 (Patent Document 1) discloses a background art of the technical field. This Patent Document 1 describes that "an assembled position is designated on a design screen, a tolerance value is input for the attachment position of an assembled part, and drawn lattice points are selected, so that the tolerance value is determined. The system automatically moves and modifies the model shape according to the set tolerance value to assemble the parts again. The operation of a mechanistic model assembled again is simulated, and effects of the tolerance and backlash on the mechanistic operation are displayed on the screen of a display device as calculation results of sensitivity of the attention point".

### Prior Art Document

### Patent Document

Patent Document 1: Japanese Patent Application Laid-Open No. 2002-269158

### SUMMARY OF THE INVENTION

### PROBLEM TO BE SOLVED BY THE INVENTION

Patent Document 1 describes a mechanism of calculating effects of the tolerance and backlash on the mechanistic model. However, the design support system of Patent Document 1 is based on that the attachment position of the assembled part is selected by a designer and the tolerance value is input. There has been conventional tolerance analysis software by which tolerance is allocated to each constitutional part using 3D CAD data, and an assembly sequence is input to examine how the attention point of a designer is affected by the tolerance. On the other hand, there has been conventional mechanism analysis software by which an equation of motion is defined so that the operation thereof is simulated on a computer. In any case, it is necessary to select the assembled position, to input the tolerance value, and to set the assembly sequence of each constitutional part. Each pieces of software is not suitable for processing in a short time at the stage of a design examination, the target range for the analysis is limited, and there is a possibility of omission of the examination. Further, a calculation example of assembly precision between parts is described, but a calculation example of the cumulative assembly precision of an assembly is not described.

Accordingly, an object of the present invention is to provide a design support technique in which cumulative assembly precision can be estimated (calculated) even if selection of the assembled position of each constitutional part, input of tolerance, and setting of an assembly sequence are not performed each time.

### MEANS FOR SOLVING THE PROBLEM

In order to solve the above-described problem, for example, the configurations described in the scope of claims are employed.
The application includes plural means for solving the problem, and the following is an example thereof. The present invention provides a design support system for an assembly composed of plural parts, the system including: a means for generating a dynamic model that generates a dynamic model having part disposition of each part of the assembly, shape characteristics, part attributes, and relationships between adjacent parts from 3D CAD data; a means for calculating the relative degrees of freedom of parts that calculates assembly precision between parts and the relative degrees of freedom of parts as a movable area from dimension precision related to connections of the dynamic model; and a means for calculating assembly sequence and cumulative assembly precision that selects connections on the basis of the relative degrees of freedom of parts and aggregates the relative degrees of freedom of parts according to the assembly sequence of the assembly.

Further, the present invention provides a design support method for an assembly composed of plural parts, the method including: a step of generating a dynamic model in which a means for generating a dynamic model generates a dynamic model having part disposition of each part, shape characteristics, part attributes, and relationships between adjacent parts from 3D CAD data; a step of calculating the relative degrees of freedom of parts in which a means for calculating the relative degrees of freedom of parts calculates assembly precision between parts and the relative degrees of freedom of parts as a movable area from dimension precision related to connections of the dynamic model; and a step of calculating assembly sequence and cumulative assembly precision in which a means for calculating assembly sequence and cumulative assembly precision selects connections on the basis of the relative degrees of freedom of parts and aggregates the relative degrees of freedom of parts according to the assembly sequence of each part.

Further, the present invention provides a design support program that allows a computer to execute the design support method.

### EFFECT OF THE INVENTION

According to the present invention, a connection relationship of each constitutional part is analyzed to produce a dynamic model using 3D CAD data, and the relative degrees of freedom between parts are obtained on the basis of the dynamic model. Accordingly, it is possible to provide a design support technique in which cumulative assembly precision can be estimated (calculated) even if selection of the assembled position of each constitutional part, input of tolerance, and setting of an assembly sequence are not performed each time.
The problems, configurations, and effects other than the above will become apparent from the following description of embodiments.

### BRIEF DESCRIPTION OF THE DRAWINGS

Fig. 1 shows an example of an entire outline configuration view of a design support system according to each embodiment.
Fig. 2 shows an example of a flowchart for explaining an analysis process of the assembly sequence of a 3D CAD model and cumulative assembly precision according to a first embodiment.
Fig. 3 shows an example of a part type table stored in a storage device of the design support system shown in Fig. 1.
Fig. 4A shows an example of a processing type table stored in the storage device of the design support system shown in Fig. 1.
Fig. 4B shows an example of connection features shown in the table of Fig. 4A.
Fig. 5 shows an example of a 3D CAD model.
Fig. 6 shows an example of a dynamic model generated from relationships between adjacent parts for the 3D CAD model shown in Fig. 5 in the first embodiment.
Fig. 7 shows an example of a dynamic model generated by grasping connection parts and adding connection features for the 3D CAD model shown in Fig. 5 in the first embodiment.
Fig. 8 shows an example of a dynamic model showing the relative degrees of freedom of related connection parts for the 3D CAD model shown in Fig. 5 in the first embodiment.
Fig. 9 shows an example of calculation results of the assembly sequence and the assembly precision of the 3D CAD model shown in Fig. 5 in the first embodiment.
Fig. 10 shows an example of a flowchart for explaining an analysis process of cumulative assembly precision according to the assembly sequence designated for the 3D CAD model shown in Fig. 5 in a second embodiment.
Fig. 11 shows an example of calculation results of the designated assembly sequence and assembly precision of the 3D CAD model shown in Fig. 5 in the second embodiment.
Fig. 12 shows an example of a dynamic model showing the relative degrees of freedom of related connection parts for the 3D CAD model according to a third embodiment.
Fig. 13 shows an example of a 3D CAD model information table stored in the storage device of the design support system shown in Fig. 1.
Fig. 14 shows an output example of calculation results of the assembly sequence and the assembly precision of the 3D CAD model shown in Fig. 5 in the first embodiment and an assembly image of the 3D CAD model.

### BEST MODE FOR CARRYING OUT THE INVENTION

Hereinafter, the present invention will be described using embodiments while referring to the drawings.

### First embodiment

In the embodiment, examples of a system, a method, and a program in which an assembly sequence and cumulative assembly precision are analyzed and output on the basis of 3D CAD data will be described.

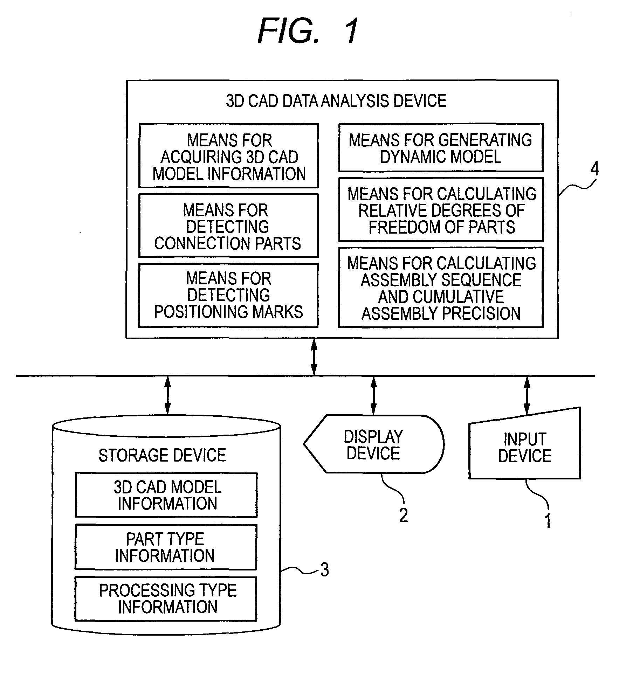

Fig. 1 shows an example of an outline entire configuration view of an analysis processing system as a design support system that is applied to each embodiment of the present invention. The main part of the analysis processing system includes: an input device 1 such as a keyboard and a mouse that inputs setting information necessary for an analysis, selects and instructs on a menu, or inputs other instructions; a display device 2 that displays a target model, input information, a processing result, and development during a process; a 3D CAD data analysis device 4 that acquires adjacent relationships on the basis of 3D CAD data to generate a dynamic model and executes a process of assembly precision analysis; and a storage device 3 that stores 3D CAD data, an analysis program, calculation conditions, calculation results, and the like. In this case, the storage device 3 includes a ROM (read-only memory), a RAM (random access memory), and an external storage device.

As the input device 1, a touch panel, a dedicated switch or sensor, or a speech recognition apparatus may be used. As the display device 2, for example, a device for displaying information on a screen, such as a display, a projector, or a head-mounted display is used. A printer (not shown) that outputs information displayed on the display device 2 to a sheet of paper may be connected to the 3D CAD data analysis device 4.

It should be noted that it is not necessary to use dedicated devices as these hard configurations, but a general computer system such as a personal computer can be used.

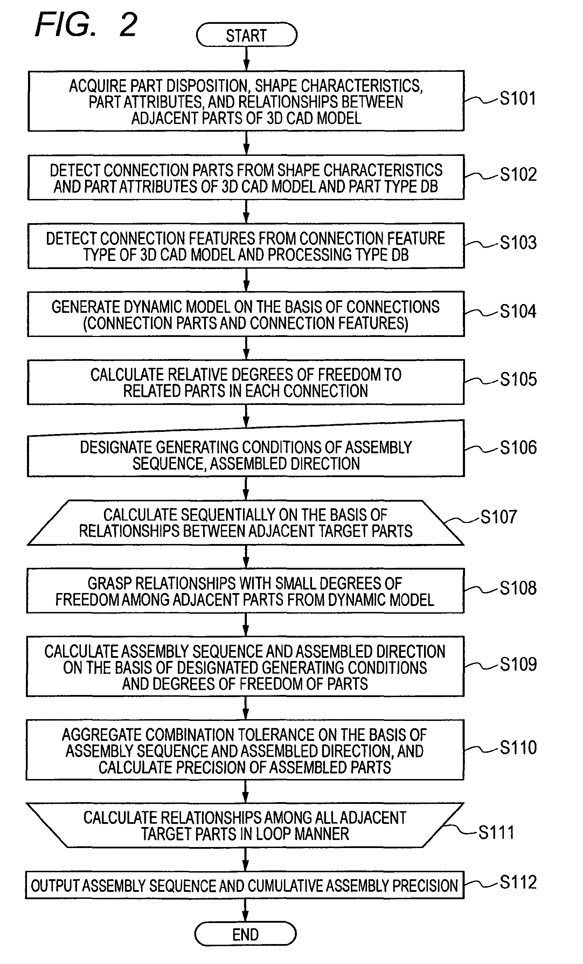

Fig. 2 shows an example of a flowchart for explaining a processing method in which the assembly sequence and the cumulative assembly precision are analyzed and output on the basis of the 3D CAD data.

In Step S101, information of part disposition, shape characteristics, part attributes, and relationships between adjacent parts is acquired from a 3D CAD model as an analysis target by a means for acquiring information of a 3D CAD model (analysis target model: assembly) of the 3D CAD data analysis device 4, and is stored into a 3D CAD model information DB of the storage device 3.

In this case, it is assumed that the analysis target is an assembly model that is an assembly composed of plural parts. It should be noted that a modeling operation of the 3D CAD model and an operation of designating a model as an analysis target are omitted in the flowchart of Fig. 2.

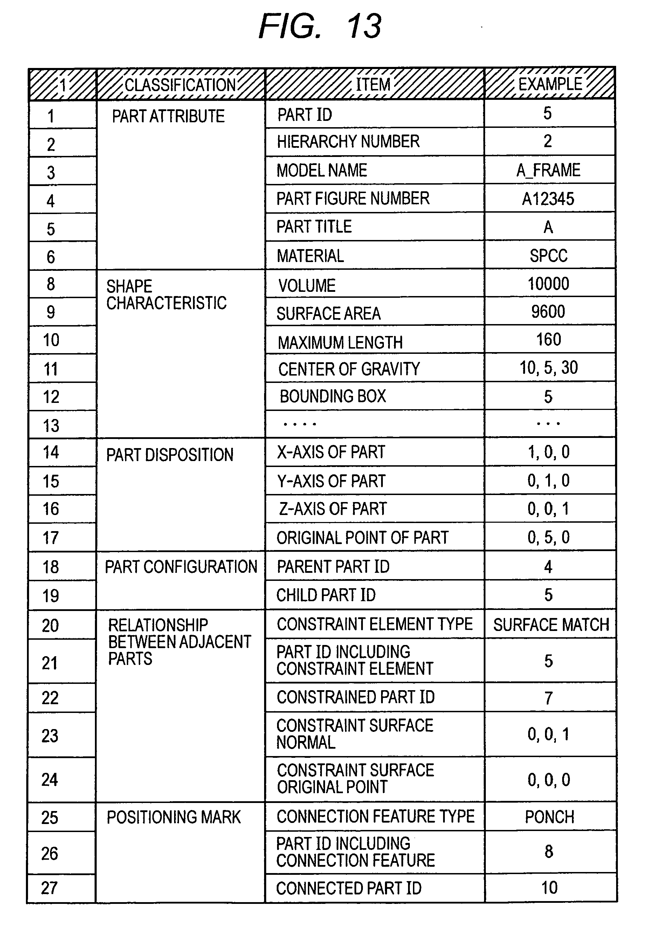

Fig. 13 shows an example of items of a table configuration for explaining information of the acquired 3D CAD model. The table includes classifications of part attributes, shape characteristics, part disposition, part configurations, relationships between adjacent parts, and positioning marks. A part ID that uniquely identifies a part and an assembled part in the 3D CAD model is set and information of each part ID is stored.

The part attributes represent information such as a part ID, a hierarchy number showing a configuration on the 3D CAD model, a model name, a part number, a part title, and a material. The shape characteristics represent information such as a volume, a surface area, a maximum length, and the center of gravity. In addition, information such as a bounding box (coordinates of eight vertexes of a cuboid serving as a boundary that envelops a part in a part coordinate system), the principal moment of inertia, the principal axis of inertia, and a mass may be used.

The part disposition represents the position and attitude of each part on the assembly model disposed in a world coordinate system, and includes three axes of X, Y, and Z and an original point of the part in the part coordinate system of each part.
The part configuration represents information showing parent-child relationships between an assembled part and a part of the 3D CAD model.

The relationships between adjacent parts represent assembly constraint information to be set when modeling an assembly model, and include a constraint element type, a part ID including a constraint element, a part ID that is constrained (constrained part ID), a constraint surface normal showing a constraint surface, and a constraint surface original point. Further, in addition to the information set by a designer when modeling, the constraint information is preferably acquired by a clearance analysis between parts on the basis of the assembly model. As a method of the clearance analysis in this case, another model that is located within a clearance distance from each surface of a part modeled on the basis of a set threshold value is searched to grasp information such as the position and attitude of the surface (the flat surface, cylindrical surface, conical surface, or the like) of the adjacent part obtained as a result of the search.

It should be noted that as the constraint surface information obtained from the information of the assembly constraint and the clearance analysis, in the case of the flat surface, a constraint surface normal vector directed outward of the model and a point on the surface are obtained at the constraint surface original point. In addition, in the case of the cylindrical surface, while the axial direction of the cylinder is assumed as a constraint surface normal vector, a point on the axis is set as the constraint surface original point.

In Step S102, connection parts are detected from the shape characteristics and the part attributes of the 3D CAD model and a part type DB by a means for detecting connection parts of the 3D CAD data analysis device 4.

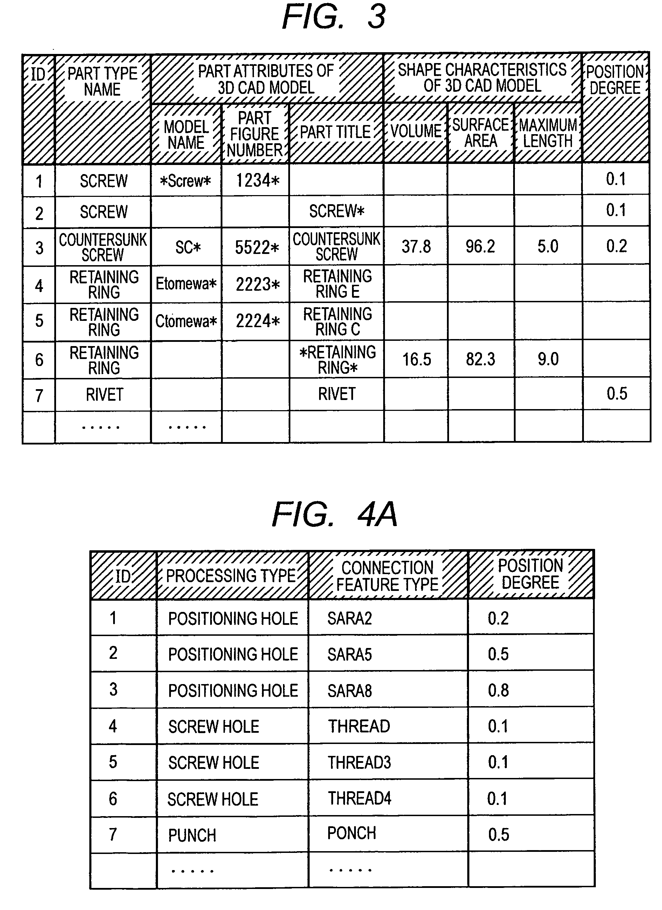

Fig. 3 shows an example of a table configuration for explaining a part type information DB of the storage device 3. The table contains, as information to locate a part type, items of 3D CAD part attributes (a model name, a part figure number, and a part title) and 3D CAD shape characteristics (a volume, a surface area, and a maximum length), and a part type name and a position degree under the locating conditions in each row are identified by the part type ID. It should be noted that items other than blanks are searched as the locating conditions in each row in the example of Fig. 3. In this case, the part figure number and the part title are text information arbitrarily defined for a 3D CAD part model or assembly model by a user. Further, in the part attributes of a string of characters such as the 3D CAD model name and the part title, the name or title is located not only by perfectly matching a string of all characters, but also by partially matching in some cases. Accordingly, the table stores a string of characters containing a wildcard character (such as *) that represents an arbitrary character. It should be noted that a column of conditions of a string of characters may be added to define conditions such as perfect match, left-hand match, and right-hand match. Further, as the shape characteristics, mass characteristics that can be acquired by calculating the 3D CAD model such as the vertexes of the bounding box, the center of gravity, and the principal moment of inertia in a part model may be stored in addition to the above-described information. Further, the assembly precision of a connection part such as dimension tolerance is stored, in addition to the position degree, in the part type table to be used in the calculation to be described later.

For the model matching each column on the right side of the part type, the part type of the connection part is grasped. Empty cells may be arbitrarily set, and each column is searched using the AND condition. In the case where the OR condition is provided, empty cells in plural rows of a predetermined column are defined.

In Step S103, the part ID related to connection features is detected from the connection feature type of the 3D CAD model and a processing type information DB by a means for detecting positioning marks of the 3D CAD data analysis device 4.

It should be noted that the 3D CAD model information DB, the part type information DB, and the processing type information DB represent information stored in a hard disk.

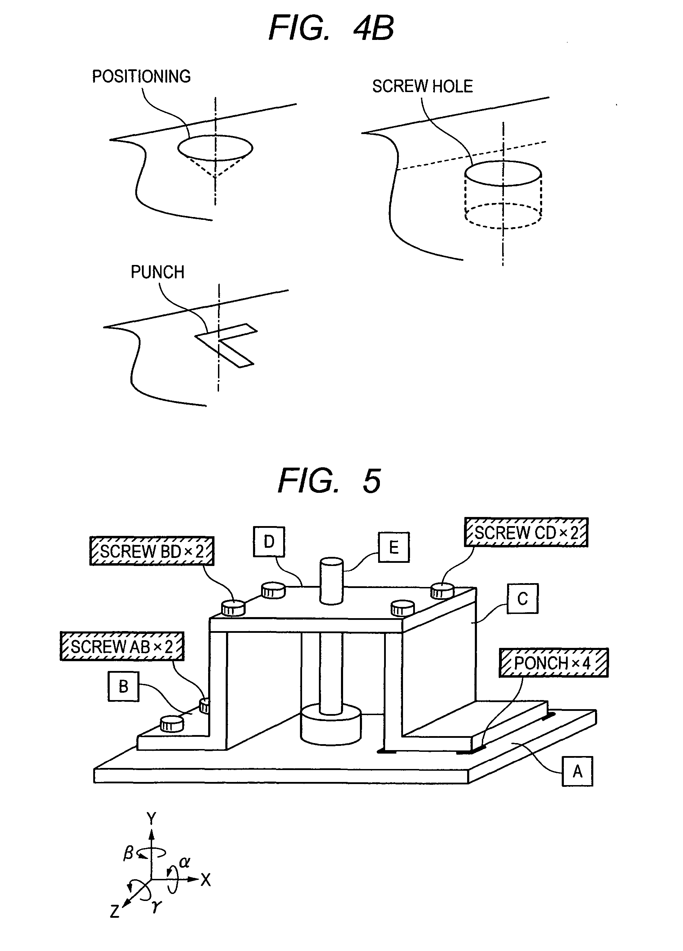

Fig. 4A shows an example of a table configuration for explaining the processing type information DB of the storage device 3. In the table, a processing type is located using a feature name of the 3D CAD model. It should be noted that assembly precision such as a position degree is stored for each feature. Fig. 4B shows an example (a positioning hole, a punch, a screw hole, and the like) of the feature information.

In Step S104, a dynamic model is generated on the basis of connections (connection parts and connection features) by a means for generating a dynamic model of the 3D CAD data analysis device 4.

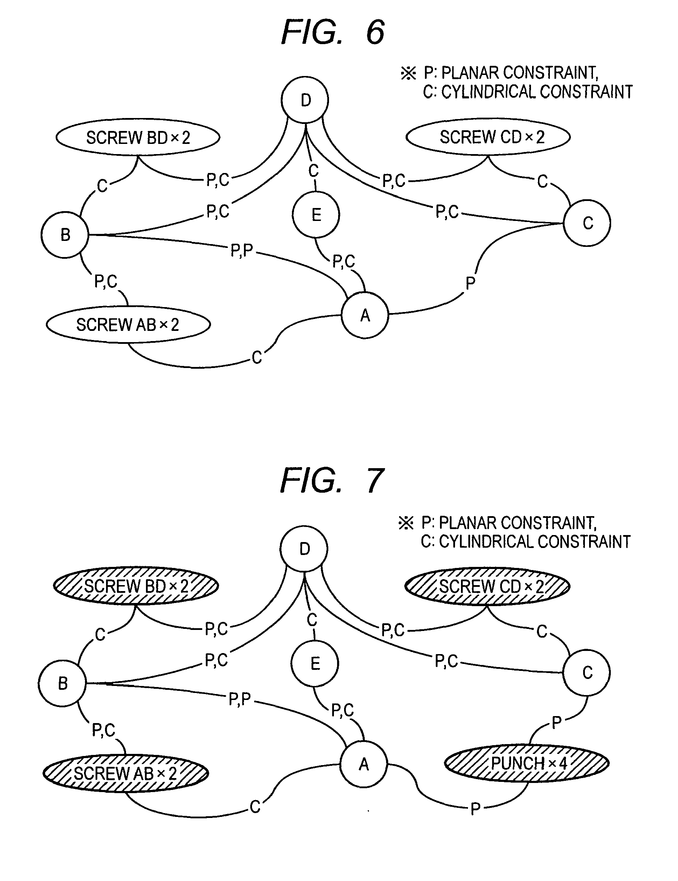

Fig. 5 shows an example of the 3D CAD model, and Fig. 6 shows an example of the dynamic model generated from the relationships between adjacent parts of the 3D CAD model shown in Fig. 5. The model shown in Fig. 5 is an assembly configured using parts A, B, C, D, and E, and screws AB, screws BD, and screws CD. Further, there are four punches (connection features PONCH) of positioning marks on an upper surface of the part A and a lower surface of the part C. It should be noted that parts with the same part title and the same connection feature are represented by "× the number of parts" (for example, screw AB×2, and the like) in the drawing. However, each piece of information is managed using a unique part ID as shown in Fig. 13.

In this case, cylinder axis match (C: cylindrical constraint), surface match (P: planar constraint), and the like are grasped as constraint element types from the relationships between adj acent parts of Fig. 13, and the relationships between parts are grasped using a part ID including a constraint element and a constrained part ID. Further, the direction is grasped using a constraint surface normal vector. Accordingly, the dynamic model as shown in Fig. 6 can be output using a graph expression in which the parts are represented by nodes and the constraint relations are represented by edges.

In this case, each of the part A and the part C of Fig. 5 has four positioning mark punches, and the part A and the part C are fixed to each other by welding. In this case, it can be grasped that the connection feature PONCH showing the positioning is modeled in the part A with a part ID 5 including connection features as shown in Fig. 13, and has a relationship with a connection part ID 10 to be connected. In addition, the processing type punch of the connection feature PONCH and the position degree are grasped form the processing type DB of Fig. 4A. An example of a dynamic model generated by adding from the relationships between adjacent parts grasped using the connection features to Fig. 6 is shown in Fig. 7. The colors of the nodes of the detected connections (connection parts and connection features) are changed (not shown).

Further, parts with the same part title, the same connection feature, and the same relation are represented by "× the number of parts" in one node in Fig. 6 and Fig. 7. However, parts with the relationships of the same surface and the same direction, and having the same part ID are aggregated in the example of Fig. 5.

In this case, Fig. 6 shows an example in which a relevant part ID is grasped from information such as the constraint element type and the constraint surface on the basis of the assembly constraint information to generate the dynamic model. However, in the case where the screw hole shown in the processing type table of Fig. 4A is acquired as the connection feature, the dynamic model of Fig. 7 can be generated on the basis of the positioning mark information of the connection features of the screw hole and the punch in the model of Fig. 5.

In Step S105, the relative degrees of freedom to the related parts in each connection are calculated by a means for calculating the relative degrees of freedom of parts of the 3D CAD data analysis device 4. In each connection part grasped, for example, the screw AB is fixed to the part A through the screw hole, and the degrees of freedom corresponding to the diameter of the hole are generated relative to the part B. In this case, the position degree of the screw hole is grasped as 0.2 on the basis of an example of ID=3 in the part type table of Fig. 3. As the degrees of freedom corresponding to the diameter of the hole, a movable area (the degrees of freedom) is calculated on the basis of the difference between the diameter of the hole and the diameter of the axis. In addition, the position degree of the processing type punch is grasped as 0.5 on the basis of an example of ID=7 in the processing type table of Fig. 4A. Accordingly, the movable area is grasped for each connection part and each connection feature. The degrees of freedom between two parts correspond to the smallest area satisfying the AND condition of the movable area in each connection, and are calculated as the relative degrees of freedom between parts having a connection relationship.

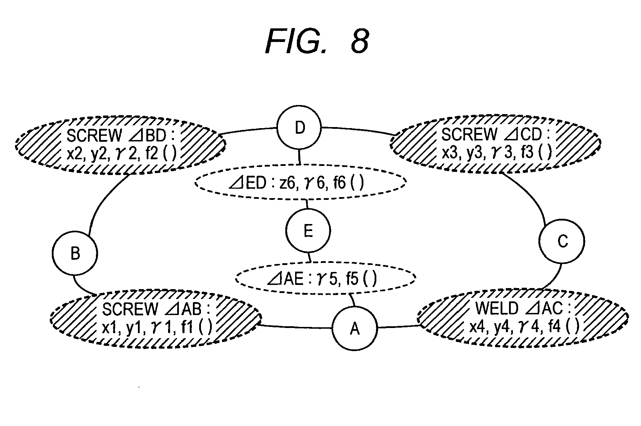

Fig. 8 shows an example of a graph expression in which the parts are represented by nodes and the relative degrees of freedom between adjacent parts are represented by edge information. The relative degrees of freedom are represented by six axes (see Fig. 5) of displacement (x, y, z) of the X-axis, Y-axis, and Z-axis as the movable area and rotational displacement (α, β, γ) around the X-axis, Y-axis, and Z-axis, a relational expression of the six axes, and an equation f() showing the range. For example, the screw AB connects the part A to the part B, and has the degrees of freedom of x1 in the X-axis direction, y1 in the Y-axis direction, and γ1 around the Z-axis. In addition, the relational expression showing the movable range of the displacement is represented by f1().

Further, there is a case where the connection parts and the connection features are not located between the adjacent parts as the step shaft part E of Fig. 7. In such a case, the assembly precision between the adjacent parts is calculated as similar to the above.

After Step S106, the assembly sequence and the cumulative assembly precision are calculated by a means for calculating assembly sequence and cumulative assembly precision of the 3D CAD data analysis device 4. It should be noted that the means for acquiring 3D CAD model information, the means for detecting connection parts, the means for detecting positioning marks, the means for generating a dynamic model, the means for calculating the relative degrees of freedom of parts, and the means for calculating assembly and cumulative assembly precision are programs running on a processor.

First, the generating conditions of the assembly sequence and the assembled direction are designated in S106. For example, in the connection relation graph of Fig. 8, the part to be assembled next is determined while the adjacent edge is selected in the assembly. There are plural plans such as which part should be assembled first, which part of the edge should be assembled next, and how the assembled direction at the time is calculated. The generating conditions for the calculation are set.

As the conditions for determining the assembly sequence, items to be considered in assembling are listed as options such as the descending order of the volume or mass, or the ascending order of the coordinates of the lower surface and the center of gravity. Further, in addition to such values calculated from the model, a base part that is arbitrarily designated or a sequence that is partially designated by a user may be used as the generating conditions. Further, priorities are set for fastening methods in connections, and such options are provided as welding takes precedence over the others, or welding takes precedence over screw fastening. As the generating conditions when the assembly sequence is determined on the basis of the adjacent relationships, combined conditions obtained by setting priorities for the ones selected by a user among the options of the conditions are set as the generating conditions of the assembly sequence.

Further, as the generating conditions of the assembled direction, the normal direction is used as the assembled direction in the case of the planar constraint and the central axis is used as the assembled direction in the case of the cylindrical constraint basically from the relationships between adjacent parts. However, there is a case where the assembled direction can be defined in advance depending on the part type such as the screw part. In this case, the assembled direction is defined in the part type table, and the set direction may be calculated first. In addition, in the case where plural candidates of calculation results are obtained, there are conditions in which calculations are performed plural times or the lower side where the assembly can be easily performed is given priority. The combined conditions obtained by setting priorities for the ones selected by a user among these conditions are set.

In Step S107 to Step S111, a loop calculation is sequentially performed on the basis of the adjacent relationship of the target part. In Step S108, a relationship with small degrees of freedom among the adjacent parts is grasped from the dynamic model. For example, in the case of the part A of Fig. 8, the relationship with the part E corresponds to the above. Among the relative degrees of freedom between parts as the calculation results, the connection relationship with small degrees of freedom may be used for the next assembly sequence as an option of the generating conditions.

In Step S109, the assembly sequence and the assembled direction are calculated on the basis of the designated generating conditions and the degrees of freedom of parts. Further, combined tolerance is accumulated on the basis of the assembly sequence and direction, and the assembly precision of the assembled part is calculated in Step S110.

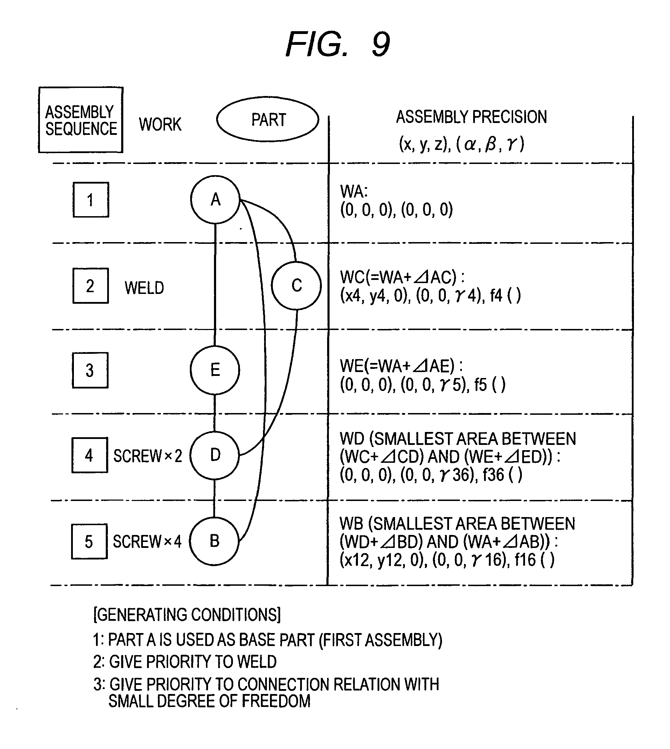

First, the assembly sequence will be described. Fig. 9 shows an example of the calculation results of the assembly sequence and the assembly precision. The results were obtained by calculating on the basis of the model of Fig. 8 under the generating conditions:
1. The part A is used as a base part (first assembly)
2. Priority is given to weld
3. Priority is given to a connection relationship with small degrees of freedom.
When generating the assembly sequence (S109), the part A is the first assembly from the generating conditions. Second, the part C is assembled from the adjacent relationship with the part A and the generating condition where priority is given to weld. The other three parts are candidates from the adjacent relationships of the part A and the part C with the assembly. The assembling is performed in the order of the part E, the part D, and the part B from the generating condition where priority is given to a connection relationship with small degrees of freedom.

In this case, the assembly precision when assembling the parts according to the assembly sequence is calculated (S110). The first assembly part (base part) is fixed to the original point of the world coordinate system, and the relative degrees of freedom between parts are accumulated according to the assembly sequence, so that the cumulative assembly precision of the part is calculated at the time of each assembling. In the case where plural degrees of freedom are calculated from the adjacent relationship, the smallest area between the both movable areas is calculated. It should be noted that the assembly precision is represented by a string of characters in the explanation diagram. However, calculated values such as the minimum value, the maximum value, the average value, and the standard deviation are actually shown.

Next, the assembled direction will be described. The assembled direction is calculated from the constraint surface of the adjacent parts according to the assembly sequence (S109). For example, the part A and the part C are constrained by the upper surface of the part A and the lower surface of the part C, and are positioned with the punch feature. Therefore, the part C can be calculated as the assembled direction (the lower direction in the drawing) opposite to the normal direction of the upper surface of the part A. The other parts are similarly calculated from the adjacent relationship.

The loop calculation is performed for the adjacent relationships of the all target parts (S111), so that the assembly sequence can be calculated on the basis of the 3D CAD data, and the cumulative assembly precision can be analyzed and output according to the calculated assembly sequence (S112).

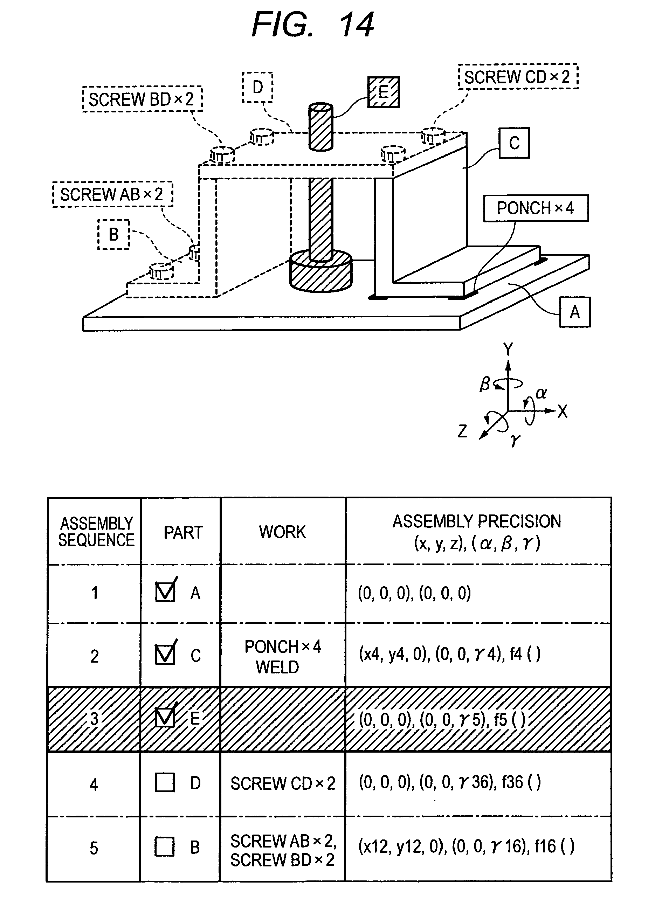

Further, the input data is the 3D CAD model. Thus, the 3D model can be easily displayed according to the calculated assembly sequence, and the movable area of the part to be assembled according to the assembly sequence can be easily highlighted. Fig. 14 shows an example of a combined output of the calculation results of the assembly sequence and the assembly precision, and the 3D CAD model (assembly image). As the calculation results, a list of parts, work and assembly precision according to the assembly sequence is displayed. In the case where there is a hierarchy such as an assembly part, a hierarchical tree may be displayed. Display or non-display of the 3D CAD model is switched using a check box on the left side of each part name. Further, the 3D CAD model in the row of the selected part is highlighted. The assembly sequence and the assembly precision (the movable area of the part) of the calculation results may be displayed using 3D animation.

Accordingly, the assembly sequence is calculated on the basis of the 3D CAD data, and the cumulative assembly precision according to the calculated assembly sequence is analyzed, so that the assembly sequence and the assembly precision can be grasped on the 3D CAD on the basis of the output result. Thus, problems in the manufacturing process can be quickly grasped.

### Second embodiment

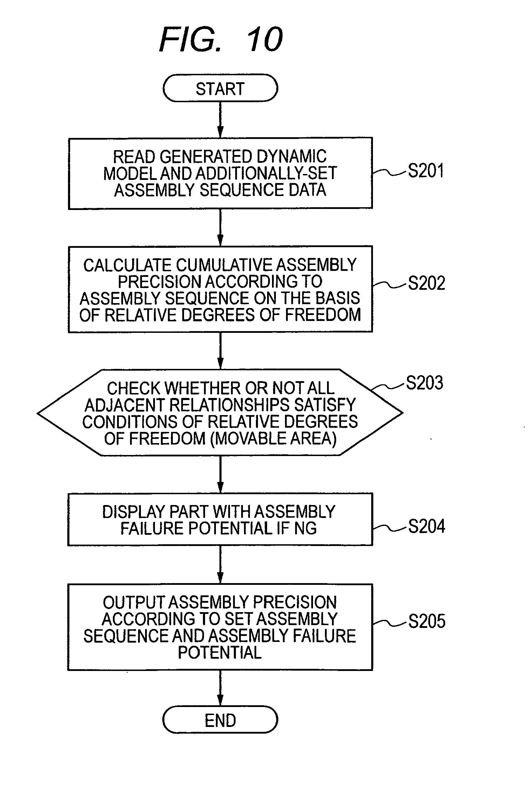

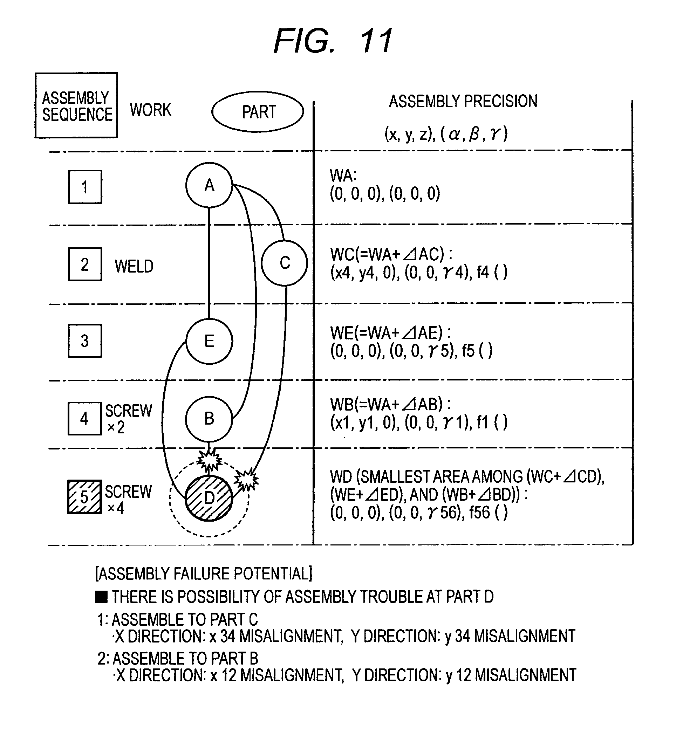

A second embodiment will be described mainly using Fig. 10 and Fig. 11. It should be noted that matters that are described in the first embodiment but not in the second embodiment can be applied to the second embodiment unless there are special circumstances. In the second embodiment, examples of a system, a method, and a program in which the cumulative assembly precision is analyzed on the basis of the assembly sequence designated based on the 3D CAD data, and assembly failure potential is output will be described.

Fig. 10 shows an example of a flowchart for explaining an analysis process of the cumulative assembly precision according to the designated assembly sequence.
In Step S201, the generated dynamic model and the additionally-set assembly sequence data are read. Here, the dynamic model is generated in Step S104 of the flowchart of Fig. 2. Further, the assembly sequence data is information obtained by defining the assembly sequence of each part, and is information to concretely designate the assembly sequence of each part unlike the assembly sequence generating conditions described in the first embodiment. It should be noted that whether to use the result obtained using the assembly sequence generating conditions as the assembly sequence or to use the designated assembly sequence data can be selected in the design support system according to the embodiment.

In Step S202, the cumulative assembly precision according to the assembly sequence on the basis of the relative degrees of freedom is calculated. For example, in the case where the assembly sequence is designated and read, the calculation result similar to the assembly precision of Fig. 9 can be obtained as the generation result shown in Fig. 9. The concept of the calculation is described above.

In Step S203, it is checked whether or not the all adjacent relationships satisfy the conditions of the relative degrees of freedom (movable area) . Further, in the case where the check result is NG (the all adjacent relationships do not satisfy the conditions) in Step S204, a part with assembly failure potential is displayed. In addition, the assembly precision according to the set assembly sequence and the assembly failure potential are output in Step S205. It should be noted that the assembly precision as the movable area is aggregated according to the assembly sequence by the means for calculating assembly sequence and cumulative assembly precision, and the assembly precision is aggregated along the related adjacent relationships according to the assembly sequence to calculate the possibility of a trouble in assembling.

Fig. 11 shows a generation result in the embodiment when an assembly sequence different from the example of Fig. 9 is designated. In Step S202, the cumulative assembly precision according to the assembly sequence is calculated. In Step S203, it is checked whether or not the cumulative assembly precision according to the assembly sequence satisfies the relative degrees of freedom calculated from the adjacent relationships with the related part. For example, the number of adjacent relationships of the part C, the part E, and the part B according to the assembly sequence is one, and thus there is no problem. In this case, the number of related adjacent relationships of the part D is three, and the aggregated assembly precision is calculated from the relationships with the part E as a result. Thus, there is a possibility that the aggregated assembly precision does not satisfy the cumulative assembly precision of the part C and the part B. As an output, a part with assembly failure potential is clearly specified and the direction and value of the assembly misalignment are output. Further, the input data is the 3D CAD model. Thus, the 3D model can be easily displayed according to the designated assembly sequence, a part with assembly failure potential when being assembled according to the assembly sequence can be easily clearly specified, and an area of the assembly misalignment can be easily highlighted.

Accordingly, a part with assembly failure potential when being assembled according to the designated assembly sequence can be grasped, and problems can be grasped and amended on the basis of the direction and value of the assembly misalignment. Thus, it is possible to prevent a trouble in assembling.

### Third embodiment

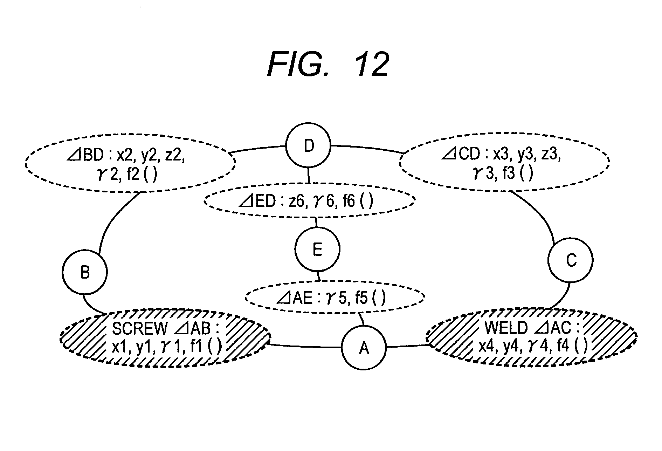

A third embodiment will be described mainly using Fig. 12. It should be noted that matters that are described in the first or second embodiment but not in the third embodiment can be applied to the third embodiment unless there are special circumstances. In the embodiment, examples of a system, a method, and a program in which the relative degrees of freedom (movable area) between adjacent parts are calculated on the basis of the 3D CAD data, and a part that is supposed to be fixed but is not fixed is extracted will be described. It should be noted that as an application of the embodiment, a part that is supposed to be movable but is fixed can be extracted.

Fig. 12 shows a result of calculating the dynamic model and the relative degrees of freedom after performing the processes of S101 to S105 in the flowchart of Fig. 2 using the 3D CAD model in which the screw BD and the screw CD are not written as an input in the assembly model of Fig. 5.

As shown in the first embodiment, the assembly sequence is calculated, and then the cumulative assembly precision is calculated. As shown in the second embodiment, the assembly precision is aggregated according to the designated assembly sequence. Accordingly, a part that is not fixed can be found (the part D in the case of Fig. 12). The input data is the 3D CAD model. Thus, the 3D model can be easily displayed according to the assembly sequence, and a part that is not fixed can be easily clearly specified and highlighted. It should be noted that the assembly precision as the movable area is aggregated according to the assembly sequence and a part that is not fixed is extracted from the movable area by the means for calculating assembly sequence and cumulative assembly precision.

Accordingly, a part that is supposed to be fixed but is not fixed can be extracted in the 3D CAD data. Thus, a problem of the design model can be immediately grasped and solved. As a result, redesigning can be prevented.

It should be noted that the present invention is not limited to the above-described embodiments, but various modifications may be included. For example, each embodiment has been described in detail to understandably explain the present invention, and is not necessarily limited to one having the all constitutional elements described above. Further, a part of the configuration in one embodiment can be replaced by a configuration of another embodiment, and the configuration in one embodiment can be added to another embodiment. In addition, a part of the configuration in each embodiment can be added to or replaced by another, or deleted.

Further, some or all of the configurations, functions, processing units, processing means, and the like may be realized by hardware such as designing with an integrated circuit. Further, the configurations, functions, and the like may be realized by software while a processor interprets and executes programs realizing the functions. Information of programs, tables, files, and the like for realizing the functions can be stored in a memory or a recording device such as a hard disk or an SSD (Solid State Drive), or on a recording medium such as an IC card, an SD card, or a DVD.

In addition, control lines and information lines that are believed to be necessary in the explanation are illustrated, and all control lines and information lines in a product are not necessarily illustrated. In fact, almost the all configurations are mutually connected.

### DESCRIPTION OF REFERENCE NUMERALS

1...input device
2...display device
3...storage device
4...3D CAD data analysis device

## Claims

1. A design support system for an assembly composed of plural parts, the system comprising:
a means for generating a dynamic model that generates a dynamic model having part disposition of each part of the assembly, shape characteristics, part attributes, and relationships between adjacent parts from 3D CAD data;
a means for calculating the relative degrees of freedom of parts that calculates assembly precision between parts and the relative degrees of freedom of parts as a movable area from dimension precision related to connections of the dynamic model; and
a means for calculating assembly sequence and cumulative assembly precision that selects connections on the basis of the relative degrees of freedom of parts and aggregates the relative degrees of freedom of parts according to the assembly sequence of the assembly.

2. The design support system according to claim 1,
wherein the means for calculating assembly sequence and cumulative assembly precision further generates the assembly sequence of the assembly on the basis of the priorities of part disposition information, the priorities of shape parts, the priorities of part types, and the priorities of shape characteristics on the basis of the dynamic model.

3. The design support system according to claim 1 or 2,
wherein the means for calculating assembly sequence and cumulative assembly precision further selects connections so as to reduce the relative degrees of freedom of parts between parts of the dynamic model having the relationships between adjacent parts, and generates the assembly sequence of the connections with small degrees of freedom of parts as one of generating conditions of the assembly sequence.

4. The design support system according to claim 1,
wherein the means for calculating assembly sequence and cumulative assembly precision further aggregates the assembly precision as a movable area according to the assembly sequence, aggregates the assembly precision according to the related adjacent relationship according to the assembly sequence, and calculates the possibility of a trouble in assembling.

5. The design support system according to claim 1,
wherein the means for calculating assembly sequence and cumulative assembly precision further aggregates the assembly precision as a movable area according to the assembly sequence, and extracts a part that is not fixed from the movable area.

6. A design support method for an assembly composed of plural parts, the method comprising:
a step of generating a dynamic model in which a means for generating a dynamic model generates a dynamic model having part disposition of each part, shape characteristics, part attributes, and relationships between adjacent parts from 3D CAD data;
a step of calculating the relative degrees of freedom of parts in which a means for calculating the relative degrees of freedom of parts calculates assembly precision between parts and the relative degrees of freedom of parts as a movable area from dimension precision related to connections of the dynamic model; and
a step of calculating assembly sequence and cumulative assembly precision in which a means for calculating assembly sequence and cumulative assembly precision selects connections on the basis of the relative degrees of freedom of parts and aggregates the relative degrees of freedom of parts according to the assembly sequence of each part.

7. A design support program that allows a computer to execute the design support method of claim 6.

8. The design support system according to claim 1,
wherein the part attributes include a model name, a part figure number, and a part title.

9. The design support system according to claim 1,
wherein the relationships between adjacent parts are assembly constraint information of the assembly, and include a constraint element type, a part ID including a constraint element, a constrained part ID, a constraint surface normal representing a constraint surface, and a constraint surface original point.

10. The design support system according to claim 9,
wherein the assembly constraint information is acquired by a clearance analysis between parts on the basis of the assembly.
